# EUROPÄISCHE PATENTSCHRIFT

(11) **EP 2 823 430 B1**
(45) Veröffentlichungstag und Bekanntmachung des Hinweises auf die Patenterteilung: **07.11.2018**
(21) Anmeldenummer: 13709366.2
(22) Anmeldetag: 05.03.2013
(51) Int. Cl.: G06F 21/44, B60W 50/02

(54) **ELEKTRONISCHES REGELUNGSSYSTEM**
ELECTRONIC CONTROL SYSTEM
SYSTÈME DE RÉGULATION ÉLECTRONIQUE

(30) Priorität: 06.03.2012 DE 102012203503; 19.12.2012 DE 102012024818
(43) Veröffentlichungstag der Anmeldung: 14.01.2015
(73) Patentinhaber: Continental Teves AG & Co. OHG, 60488 Frankfurt am Main (DE); Conti Temic Microelectronic GmbH, 90411 Nürnberg (DE)
(72) Erfinder: HABEL, Stephan, 90530 Wendelstein bei Nürnberg (DE); ROSS, Hans-Leo, 64653 Lorsch (DE)
(86) Internationale Anmeldenummer: PCT/EP2013/054380
(87) Internationale Veröffentlichungsnummer: WO 2013/131900

(56) Entgegenhaltungen:
- WO-A1-2009/124803
- DE-A1-102009 011 430
- DE-A1-102010 039 963
- DE-C1- 10 141 737
- ANONYMOUS: "Autosar", INTERNET CITATION, 14. November 2010 (2010-11-14), Seiten 1-6, XP002628566, Gefunden im Internet: URL:http://en.wikipedia.org/w/index.php?ti tle=AUTOSAR&oldid=396732206 [gefunden am 2011-03-16]

## Beschreibung

Die vorliegende Erfindung betrifft ein elektronisches Regelungssystem gemäß Oberbegriff von Anspruch 1.

Wichtige Sicherheitsziele bei Entwicklungen von elektronischen Regelungssystemen insbesondere in der Automobilelektronik leiten sich von den Auswirkungen bei Fehlfunktionen dieser Systeme ab. Kritische Auswirkungen bei Fehlfunktionen oder Ausfällen können ein Blockieren der Räder eines Fahrzeugs oder ein zu hohes, ungewolltes Bremsmoment an der Hinterachse mit der möglichen Folge einer Destabilisierung des Kraftfahrzeugs sein. Beispielsweise können Funktionen, welche eine autonome Beschleunigung umfassen, insbesondere für starke Drehmomentsteigerungen bei Verwendung von Elektromotoren als Antriebsaggregate, zu einer Destabilisierung führen. Die ISO 26262 fokussiert hierfür generell die Sicherheitsziele, dass zu große ungewollte Effekte bzw. zu kleine oder negative ungewollte Effekte vermieden werden, weshalb die meisten Systeme einen flexiblen Korridor für ihre Sicherheits-Konzepte absichern müssen. Das tolerierbare, ungewollte Drehmoment befindet sich innerhalb dieses Korridors, worin das Fahrzeug in allen zulässigen Fahrsituationen sicher kontrolliert werden können muss. Oberhalb dieses Korridors befinden sich beispielsweise gefährliche Beschleunigungseffekte, während unterhalb Blockierungen an den Achsen oder Rädern vorliegen. Die Ausgestaltung des Korridors hängt im Wesentlichen von den Fahrzeugspezifikationen, wie beispielsweise Achsenabstand, Gewicht, Schwerpunkt sowie weiteren Parametern, wie Geschwindigkeit, Straßenbeschaffenheit, Querbeschleunigung, Kurvenradius, etc. ab. Sogar für eine stabile Geradeausfahrt existiert ein solcher Korridor.

Die oberen und unteren Grenzen müssen entsprechend der Sicherheitsanforderungen (z.B. ASIL) der jeweiligen Funktion und der Fahrzeugspezifika sowie der weiteren Parameter festgelegt werden. Das mögliche fehlerhafte Auslösen eines zu geringen oder zu hohen ungewollten Drehmoments durch eine Fahrerassistenzfunktion, welche die Beschleunigung des Fahrzeugs beeinflusst, kann für diese Funktion eine Eingruppierung in eine hohe Sicherheitsanforderungsstufe, wie z.B. ASIL D, erfordern. Das bedeutet, dass ein Fehler dieser Funktion unmittelbar zu einer Gefährdung von Personen führen kann.

Nach der IEC 61508 wird unter anderem das Sicherheitsziel verfolgt, ein System in einen sicheren Zustand zu überführen, was häufig darin resultiert, dass bei Auftreten eines Fehlers in einen stromlosen Zustand geschaltet wird. Damit soll eine potentielle Gefährdung von Personen begrenzt werden. Aus diesem Grund existieren insbesondere gemäß ISO 26262 mehrere Sicherheitsziele, wobei der sichere Zustand ein Zustand ist, welcher keine Gefährdung für Personen darstellt, jedoch nicht notwendigerweise in einen strom- oder energielosen Zustand führt. Als grundlegendes Sicherheitskonzept für Motor-, Getriebe-, Lenkungs- und andere Fahrwerkregelsysteme, wird in der DE 10 2006 056 668 A1 ein Verfahren zum Sicherstellen oder Aufrechterhalten der Funktion eines komplexen sicherheitskritischen Gesamtfahrzeugregelungs- und/oder -steuerungssystems beim Auftreten von Fehlern, Fehlfunktionen oder sonstigen Ereignissen, die einen Einfluss auf die Verfügbarkeit von Teilfunktionen haben, beschrieben. Für notwendige Systemkomponenten sind hierfür Betriebsmodi definiert, wobei im Fehlerfall die Betriebsmodi ermittelt werden, welche von den aufgetretenen Fehlern betroffen sind. Aus den noch verfügbaren Betriebsmodi wird anschließend, im Hinblick auf eine möglichst weitreichende Verfügbarkeit des Gesamtsystems, ausgewählt und somit die Leistungsfähigkeit des Systems stufenweise degradiert.

Insbesondere für Motormanagementsysteme der Elektromobilität müssen Implementierungen bis zur höchsten Sicherheitsanforderungsstufe (z.B. ASIL D) in Betracht gezogen werden. Ungewollte Effekte, wie sie oben beschrieben sind, finden besonders bei Mehr-Ebenen-Softwarearchitekturen für sicherheitsrelevante Kraftfahrzeugregelsysteme Berücksichtigung, wie sie beispielsweise in der DE 10 2009 011 430 A1 beschrieben sind. Wesentliche Sicherheitsfunktionen werden demnach durch eine entsprechende Konzeptionierung der Hardware und Software sowie deren Interaktion realisiert und insbesondere die von ASIL geforderte Unabhängigkeit der Sicherheitsfunktionen ,z.B. bei der Datenkommunikation, wird durch eine Datenverschlüsselung erzielt. Kann der Schlüssel beim Empfänger nicht mehr entschlüsselt werden, so wird über einen Abschaltpfad, wie beispielsweise einem intelligenten Watchdog (Fensterwatchdog), die Kommunikation oder das gesamte System abgeschaltet.

Moderne Generationen von (Multi-Kern-)Mikrocontrollern weisen an sich bekannte Sicherheitsmechanismen für die gesamte Hardware auf, wobei die redundanten Prozessoren häufig in einem synchronen oder asynchronen Lockstep-Betrieb operieren, so dass Einfach-, Mehrfach- oder kurzfristige Fehler kontrolliert werden können. Unter einem Mikrocontroller im Sinne dieser Beschreibung werden auch Mikroprozessoren, Mikrocontrollersysteme sowie Mikroprozessorsysteme verstanden, welche zumindest einen Prozessor aufweisen und über Peripheriefunktionen Signale erfassen sowie ausgeben können. Aus der DE 101 41 737 C1 ist ein Verfahren bekannt, bei welchem ein verschlüsselter oder authentisierter Datenaustausch zwischen Steuergeräten sowie eine zentrale Trust-Komponente zur Schlüsselvergabe vorgesehen ist, um eine verbesserte Angriffssicherheit zu erzielen.

Durch eine zeitliche Verzögerung der Abarbeitung von Aufgaben zwischen redundanten Prozessoren können Fehler innerhalb einer Sicherheitszeit (z.B. kleiner 1 ms) aufgrund integrierter Hardware-Sicherheitsmechanismen toleriert werden, da diese Fehler durch zumindest einen Sicherheitsmechanismus gehindert werden eine potentiell gefährliche Situation zu verursachen. Beispielsweise könnte der Sicherheitsmechanismus eine Datenkorrektur sein, welche als falsch erkannte Daten korrigiert und diese korrigierten Daten zur weiteren Verarbeitung nutzt.

Die Kommunikation der Hardware, wie zum Beispiel eines Mikrocontrollers mit seiner Peripherie, kann durch Fehlerkorrekturverfahren (ECC), Fehlerdetektionsverfahren (EDC) und/oder End-To-End Datenverschlüsselung (E2E) gegen unterschiedliche Fehlerarten geschützt werden. EDC ist für die Kontrolle der Fehlerkorrektur wichtig, sodass Toleranzen bzw. Reaktionen beim Auftreten mehrerer und/oder vorrübergehender Fehler angepasst werden können. Digitale Ausgangswerte von Peripherieeinheiten, wie z.B. Analog-Digital-Wandlern, können beispielsweise mittels EDC abgesichert werden, wobei die Werte der analogen Eingangsgrößen über zwei unabhängige und durch einen undefinierten Bereich abgetrennte Potentialbänder abgesichert werden. Zum Beispiel können Werte größer als 4,5 V einem High-Pegel und Werte kleiner als 0,5 V einem Low-Pegel entsprechen. Die Gültigkeitsregister werden anschließend während der Analog-Digital-Wandlung als Datenverschlüsselung bzw. Datensignatur an die digitalen Ausgabewerte gekoppelt.

Für Kraftfahrzeugsteuergeräte findet eine zunehmend Standardisierung der Softwarearchitektur bzw. eine Verwendung von Laufzeitumgebungen (RTE) statt, um unter anderem die Portabilität, Wiederverwendbarkeit sowie Sicherheit von Softwaremodulen zu verbessern und letztendlich auch Entwicklungskosten einzusparen. Für die Applikationssoftware eines Kraftfahrzeugsteuergerätes wird somit eine standardisierte Umgebung geschaffen, welche durch technische Einflüsse des Mikrocontrollers nicht mehr unmittelbar beeinflusst wird. Für eine Architekturanalyse im Sinne der Feststellung aller tatsächlich möglichen Fehlereinflüsse eines Mikrocontrollers auf die darauf implementierte Software muss im Wesentlichen jede Eigenschaft des Mikrocontrollers überprüft werden. Im Falle eines Wechsels auf einen anderen Mikrocontroller-Typ oder wenn der Hersteller des Mikrocontrollers die Produktionstechnik oder verwendete Materialien ändert, muss dies berücksichtigt werden. Der Vorteil bei der Verwendung standardisierter Softwarearchitektur ist daher, dass bei Änderungen der Hardware keine bzw. lediglich geringe Anpassungen der Applikationssoftware vorgenommen werden müssen.

Ein weiteres Sicherheitsprinzip gemäß dem Stand der Technik wird nachfolgend am Beispiel der standardisierten Softwarearchitektur AutoSar® (AUTomotive Open System ARchitecture®) erläutert. AutoSar® spezifiziert in Version 4 eine E2E-Sicherheit für einen Kommunikationskanal von einer Basissoftware zu einer Ebene einer Laufzeitumgebung (RTE). In einer Software-Ebene, welche auf einer Mikrocontroller-Abstraktions-Ebene aufbaut, werden die von der Peripherie als Eingangssignale vorliegenden Rohinformationen verschlüsselt und nach Transfer der verschlüsselten Daten durch die Softwareebenen erfolgt eine Entschlüsselung im Bereich der RTE. Die Applikationssoftware, welche als weitere Ebene der RTE übergeordnet ist, kann diese Daten dann zur weiteren Verarbeitung nutzen. Es findet also eine softwarebasierte E2E Datenverschlüsselung durch AutoSar® statt, wobei insbesondere die Hardware-Software Schnittstelle nicht abgesichert ist. Es darf jedoch keinen sicherheitsrelevanten Einfluss auf Software zur Funktionsüberwachung, Kommunikationskanäle der Peripherie, Degradationssoftware oder weiterer Sicherheitssoftware stattfinden. Durch die Trennung der Regelfunktionen und der Funktionsüberwachung sowie der Hardware- oder Systemabsicherung, zum Beispiel in der Basissoftware, in unterschiedliche Software-Ebenen können mögliche Fehlerpropagationen reduziert und somit Fehlerkaskaden, wie beispielsweise bei getrennten Steuergeräten, vermieden bzw. unterbrochen werden.

Grundsätzliche Fehler, die von der Hardware auf die Applikationssoftware wirken, können beispielsweise durch verschiedenste Ursachen verfälschte oder fälschlicherweise generierte Daten sein. Weiterhin kann es vorkommen, dass Daten durch Fehler der Hardware einem Softwareprozess nicht zeitgerecht zur Verfügung gestellt werden.

Aufgabe der Erfindung ist es daher, eine Verbesserung der funktionalen Sicherheit und Steigerung der Verfügbarkeit von sicherheitsrelevanten elektronischen Systemen, insbesondere in einem Kraftfahrzeug, zu erhalten.

Diese Aufgabe wird durch das erfindungsgemäße System gemäß Anspruch 1 gelöst.

Die Erfindung beschreibt ein elektronisches Regelungssytem, insbesondere ein Kraftfahrzeugregelungssystem, umfassend Hardwarekomponenten und Softwarekomponenten, wobei die Hardwarekomponenten durch zumindest eine Basissoftwarekomponente und/oder zumindest eine Laufzeitumgebung abstrahiert werden und in welchem ein implementiertes Sicherheitskonzept zwei oder mehrere Software-Ebenen beschreibt, wobei eine erste Software-Ebene Regelfunktionen einer Applikationssoftware umfasst und eine zweite Software-Ebene als Funktionsüberwachung insbesondere zur Absicherung von Fehlern der Regelfunktionen ausgestaltet ist, wobei sich die Erfindung weiterhin dadurch auszeichnet, dass eine von zumindest einer Hardwarekomponente bereitgestellte Datenverschlüsselung und/oder Datensignatur zur Datenabsicherung mindestens eines Kommunikationskanals der Hardwarekomponente mit mindestens einer ersten Softwarekomponente genutzt wird. In vorteilhafter Weise erfolgt damit zusätzlich eine Absicherung der Schnittstelle der Software zur Hardware, womit durch das erfindungsgemäße Regelungssystem eine Unabhängigkeit zwischen den Softwarekomponenten untereinander sowie zwischen Softwarekomponenten und Hardwarekomponenten erzielt wird. Fehlerhafte Beeinflussungen werden somit vermieden oder können entdeckt werden.

Gemäß einer besonders bevorzugten Ausführungsform ist die erste Softwarekomponente ein Integritätsmanager, wobei die über den Kommunikationskanal kommunizierten, verschlüsselten und/oder signierten Daten dem Integritätsmanager und/oder der Laufzeitumgebung und/oder der Basissoftwarekomponente bereitgestellt werden und der Integritätsmanager die kommunizierten Daten des Kommunikationskanals hinsichtlich ihrer Integrität prüft, wobei der Integritätsmanager insbesondere die Datenverschlüsselung und/oder Datensignatur zur Überprüfung der Integrität der Daten heranzieht. Die Applikationssoftware kann daher in vorteilhafter Weise auch für höchst sicherheitsrelevante Funktionen umgesetzt werden. Die Funktionsüberwachung hätte nicht die Notwendigkeit externe Einflüsse durch die Hardware zu beherrschen, sondern nur systematische Fehler, welche durch Spezifikations- und Implementierungsfehler entstehen können, abzusichern. Eine Datenverfälschung durch externe Einflüsse wird damit vermieden.

Der Integritätsmanager stellt, bei im Wesentlichen vorhandener Integrität der verschlüsselten und/oder signierten Daten besonders bevorzugt die unverschlüsselten und/oder nicht signierten Informationsdaten der Applikationssoftware bereit. Bevorzugt wird das Vorhandensein von Integrität von der jeweiligen Sicherheitsanforderungsstufe, bezogen auf eine bestimmte Datenübertragungsstrecke, bestimmt. In vorteilhafter Weise wird somit die Verletzung der Unabhängigkeit an definierter Stelle für eine Degradation bereitgestellt.

Entsprechend einer bevorzugten Ausführungsform generiert der Integritätsmanager bei nicht vorhandener Integrität der verschlüsselten und/oder signierten Daten einen Fehlercode, welcher insbesondere durch die Applikationssoftware verarbeitet werden kann, wobei die unverschlüsselten und/oder nicht signierten Informationsdaten der Applikationssoftware nicht oder lediglich gemeinsam mit dem Fehlercode bereitstellt werden und/oder den unverschlüsselten Informationsdaten wird ein nicht plausibler Wert zugewiesen.

Bevorzugt ist der Integritätsmanager der Applikationssoftware untergeordnet und/oder der Laufzeitumgebung übergeordnet und/oder in der Laufzeitumgebung implementiert, wobei die Laufzeitumgebung dem Integritätsmanager die verschlüsselten und/oder signierten Daten bereitstellt.

Bevorzugt ist ein Degradationsmanager vorgesehen, welcher als zumindest eine dritte Software-Ebene und/oder als zumindest ein Software-Prozess der ersten und/oder der zweiten Software-Ebene ausgeführt wird, wobei der Degradationsmanager mindestens eine Degradationsstufe der Regelfunktionen der ersten Software-Ebene und/oder Funktionsüberwachung der zweiten Software-Ebene umfasst.

Bevorzugt wird eine Abschaltfunktion des Degradationsmanagers durch zumindest einen Software-Prozess mit einer hohen, insbesondere einer höchsten Priorität ausgeführt. Somit wird vorteilhafterweise ein deterministisches Erreichen des bzw. der jeweiligen sicheren Zustände realisiert.

Entsprechend einer bevorzugten Ausführungsform werden in Abhängigkeit von der Integrität der Daten und/oder in Abhängigkeit vom generierten Fehlercode, eine oder mehrere selektive Abschaltungen und/oder Degradationen der Leistungsfähigkeit des Kraftfahrzeugregelungssystems und/oder der Regelfunktionen und/oder der Funktionsüberwachung durch den Degradationsmanager ausgeführt. Vorteilhafterweise kann somit ein striktes Abschalten des Systems im Fehlerfall vermieden und ein selektives Abschalten von Funktionen realisiert werden. Damit kann eine, in Abhängigkeit des Fehlers, höchst mögliche Systemverfügbarkeit erhalten bleiben, um zum Beispiel Notfahrprogramme zu realisieren, mit welchen beispielsweise ein Gefahrenbereich verlassen bzw. eine Servicewerkstatt erreicht werden kann. Als Konsequenz ergibt sich eine vorteilhafte Konformität des Sicherheitskonzeptes insbesondere mit ISO 26262, da ein Erreichen eines für die entsprechende Fehlersituation gültigen, sicheren Zustands gewährleistet werden kann.

Bevorzugt stellt der Integritätsmanager der Applikationssoftware bei vorübergehenden Fehlern nicht plausible Informationsdaten und/oder bei permanenten Fehlern einen generierten Fehlercode bereit. Somit kann vorteilhafterweise die selektive Abschaltung und/oder Degeneration der Leistungsfähigkeit des Kraftfahrzeugregelungssystems auf Basis verfügbarer Datenverschlüsselungen und/oder Datensignaturen vorgesehen werden, ohne weitere Diagnosemaßnahmen vorsehen zu müssen. Beispielsweise können somit separate Ausfallsicherheitsmechanismen für Sensordaten intelligenter Sensoren eingespart werden.

Die Funktionsüberwachung und/oder der Degradationsmanager und/oder der Integritätsmanager können bevorzugt auf die Datenverschlüsselung und/oder Datensignatur der Daten zugreifen. Der Vorteil ist, dass beispielsweise die Funktionsüberwachung über die Plausibilität der mit der Peripherie kommunizierten Daten informiert ist.

Gemäß einer weiteren bevorzugten Ausführungsform verwenden die Funktionsüberwachung und/oder der Degradationsmanager die Datenverschlüsselung und/oder Datensignatur für eine zusätzliche Plausibilisierung der Daten.

Bevorzugt erfolgt für einen Kommunikationskanal zwischen Softwarekomponenten, Softwarefunktionen und/oder Softwareprozessen die Überprüfung der Datenverschlüsselung und/oder Datensignatur durch die empfangende Softwarekomponente. Dies ist insbesondere bei Multi-Prozessoren von Vorteil, da die Datenkommunikation zwischen Softwarekomponenten durch Datenzwischenspeicherung bzw. Verarbeitung im Mikrocontroller immer verfälscht werden kann.

Bevorzugt ist ein Neustart und/oder eine Synchronisation zum Programmablauf eines das Verfahren ausführenden Mikrocontrollers im laufenden Betrieb, insbesondere innerhalb einer Sicherheitszeit vorgesehen ist, wobei im Falle der Überschreitung der Sicherheitszeit ein sicherer Zustand durch einen Abschaltmittel, insbesondere durch einen Watchdog, eingeleitet wird.

Der Integritätsmanager stellt für, insbesondere unabhängige und/oder rückwirkungsfreie, Softwarekomponenten bevorzugt datentechnische und/oder zeitliche Separierung sicher, wobei die datentechnische und/oder zeitliche Separierung bevorzugt genutzt wird um Softwarekomponenten unterschiedlicher Sicherheitsanforderungsstufen insbesondere bei Verletzung der Unabhängigkeit selektiv und/oder priorisiert abzuschalten. In vorteilhafter Weise wird für die Applikationssoftware somit eine abstrahierte Softwarearchitektur geschaffen, welche im Wesentlichen frei von fehlerhaften, nicht ermittelbaren Hardwareeinflüssen ist.

Die Erfindung bezieht sich weiterhin auf ein elektronisches Regelungssystem, insbesondere ein Kraftfahrzeugregelungssystem, zur Ausführung eines vorstehend beschriebenen Verfahrens. Eine Software-Architekturanalyse beschränkt sich für das erfindungsgemäße System in vorteilhafter Weise auf mögliche systematische Fehler, welche sich auf mögliche systematische Fehler einer Applikationssoftware reduzieren. Hierdurch werden Fehler, welche insbesondere in der Entwicklung der Softwarekomponenten entstehen vermieden.

Weitere bevorzugte Ausführungsformen ergeben sich aus der nachfolgenden Beschreibung von Ausführungsbeispielen an Hand von Figuren.

Es zeigen:
- Fig. 1: eine Prinzipdarstellung zur Beschreibung der Funktionsweise des erfindungsgemäßen Verfahrens,
- Fig. 2: eine Prinzipdarstellung, wobei eine alternative Anordnung der Software-Ebenen vorliegt und
- Fig. 3: eine Prinzipdarstellung zur Erläuterung eines weiteren Ausführungsbeispiels der Erfindung.

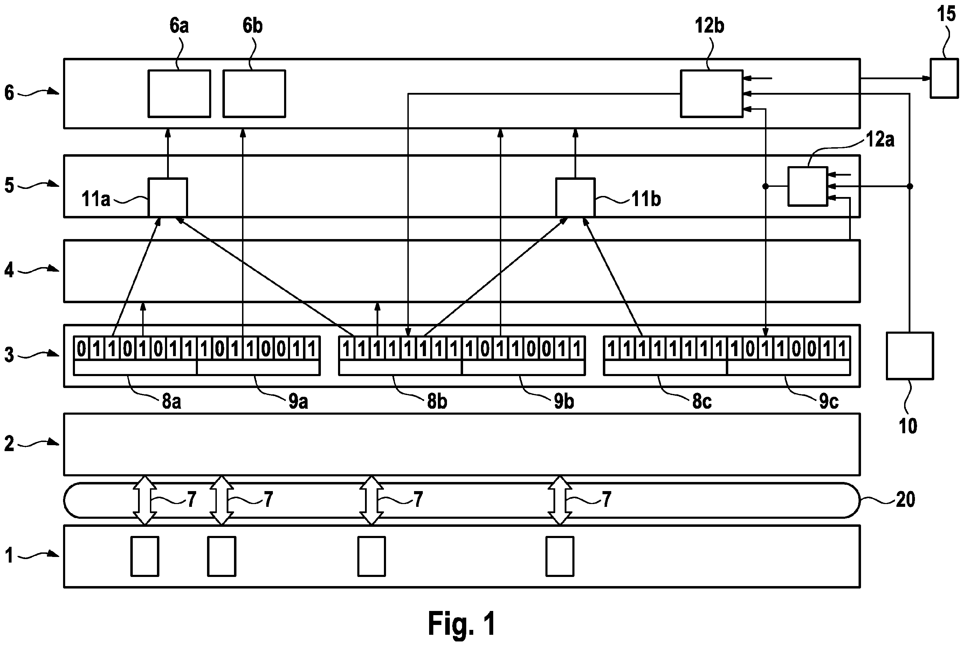

In Fig. 1 ist die prinzipielle Funktionsweise der Erfindung zur Verbesserung der funktionalen Sicherheit und Steigerung der Verfügbarkeit eines elektronischen Kraftfahrzeugregelungssystems dargestellt. Unter einem Kraftfahrzeugregelungssystem sind demgemäß auch Steuerungen beliebiger Kraftfahrzeugkomponenten zu verstehen. Zum besseren Verständnis der Erfindung am Beispiel eines Kraftfahrzeugregelungssystems sind lediglich die wesentlichsten Komponenten dessen abgebildet und/oder beschrieben.

Zur Abstraktion der Hardware eines die nachfolgend beschriebenen Softwarekomponenten ausführenden Mikrocontrollers werden Laufzeitumgebung 2 und Basissoftware 20 durch diesen ausgeführt. Unter Softwarekomponenten werden hierbei insbesondere Software-Prozesse, Software-Funktionen und/oder Software-Ebenen verstanden. Zentrales Element ist Integritätsmanager 3, der die sicherheitstechnische Integrität der Datenkommunikation überwacht und die notwendigen Bedingungen zur Verfügung stellen kann, um das Kraftfahrzeugregelungssystem mittels Degradationsmanager 6 in einen selektiven sicheren Zustand zu überführen.

Das Sicherheitskonzept sieht im Wesentlichen drei Ebenen der Applikationssoftware 4, 5, 6 vor, wobei die erste Ebene 4 die Regelfunktionen (Grundfunktionen), beispielsweise einer Kraftfahrzeugbremsenregelung, umfasst, die zweite Ebene 5 die Funktionsüberwachung der Regelfunktionen 4 ausführt und die dritte Ebene 6 als Degradationsmanager unterschiedlicher Degradationsstufen und Degradationsszenarien des Systems ausgebildet ist. Für die Funktionsüberwachung 5 werden zur Absicherung systematischer Fehler die Regelfunktionen 4 in an sich bekannter Weise mittels diversitärer Softwarealgorithmen ausgeführt. Jede Software-Ebene kann bevorzugt als ein unabhängiger Prozess der Basissoftware bzw. des Betriebssystems und/oder der Applikationssoftware implementiert sein. Besonders Funktionsüberwachung 5 und Degradationsmanager 6 können in verschiedene Prozesse 6a, 6b, auch mit verschiedenen Sicherheitsanforderungsstufen, z.B. in ASIL B und ASIL D, unterteilt sein.

Weitere Überwachungen der Softwarekomponenten, wie zum Beispiel Überwachungen der Unabhängigkeit sowie Zeitüberwachung, sind in an sich bekannter Weise durch eine Ablaufüberwachung 10 mit nachgeschaltetem Abschaltmechanismus 15, wie beispielsweise einem Prozess-Scheduler, implementiert. Dieser überwacht zum Beispiel Verletzungen der Partition, die Speicherüberwachung, die Eintrittsbedingungen abzuarbeitender Prozesse sowie deren zeitlich und logisch korrekte Abarbeitung. In Fig. 1 ist die Einbindung von Ablaufüberwachung 10 über die Bedingungsblöcke 12a und 12b in Funktionsüberwachung 5 und Degradationsmanager 6 veranschaulicht.

Im Fehlerfall können Funktionsüberwachung 5 und/oder Degradationsmanager 6 das Kraftfahrzeugregelungssystem bzw. separate Regel- und/oder Applikationsfunktionen in einen sicheren Zustand überführen bzw. degradieren, womit eine Leistungsdegradation vorgenommen bzw. der Funktionsumfang reduziert werden kann. Die Verfügbarkeit und Fehlertoleranz des Kraftfahrzeugregelungssystems wird durch diese Maßnahmen wesentlich verbessert. Beispielsweise kann die Leistungszufuhr eines Motors, welcher zu überhitzen droht, aktiv begrenzt werden.

Alle Abschaltmechanismen der Degradation können selektiv erfolgen, sodass die Grundfunktionen des Mikrocontrollers im Wesentlichen nicht abgeschaltet werden müssen. Ein Abschaltmechanismus 15, beispielsweise ein Watchdog, wäre somit selbst für Sicherheitsfunktionen mit einer hohen Sicherheitsanforderungsstufe wie ASIL D nicht zwangsläufig notwendig. Zur Verwendung eines Abschaltmechanismus 15 ergibt sich erst dann eine Notwendigkeit, wenn diese für die Abschaltung der Hardware des ausführenden Mikrocontrollers angewendet wird. Ein sicherheitsbedingter Neustart des Mikrocontrollers wird damit weitgehend vermieden und die Systemverfügbarkeit wesentlich verbessert. Zur Realisierung können entsprechende, verschlüsselte Anweisungen der Softwarekomponenten auf einen Ausgangspin des ausführenden Mikrocontrollers geschaltet und der sichere Zustand somit eingeleitet werden. Um hardwareseitig entsprechend redundant zu sein, können an sich bekannte Brückenschaltungen oder Aktivierungsleitungen verwendet werden, um einen sicheren Zustand einzuleiten. Da Softwarekomponenten eines Mikrocontrollers nicht zeitgleich sondern sequenziell abgearbeitet werden, muss nicht nur eine datentechnische sondern auch eine zeitliche Separierung berücksichtigt werden, was ebenfalls mittels des externen Abschaltmechanismus 15 überwacht und sichergestellt wird.

Der ausführende Mikrocontroller kann beispielsgemäß innerhalb der Sicherheitszeit neu gestartet werden, was insbesondere im Falle der Verwendung eines Ein-Kern-Mikrocontrollers vorteilhaft ist, da keine Redundanzen vorliegen. Die Ausgänge des Mikrocontrollers werden während des Neustarts in einen statischen Zustand versetzt und innerhalb der Sicherheitszeit erfolgen der Neustart sowie die Synchronisierung mit dem Programmablauf. Durch diese Vorgehensweise wird während eines Neustarts kein sicherheitskritischer Zustand des Kraftfahrzeugregelungssystems hervorgerufen, da die gesamte Peripherie funktionsfähig bleibt und auch Hilfsfunktionen, wie z.B. die Kommunikation, nicht unterbrochen werden müssen. Ist ein Neustart innerhalb der Sicherheitszeit nicht möglich, überführt der externe Abschaltmechanismus 10 das Kraftfahrzeugregelungssystem in einen sicheren Zustand. Werden die Abschaltpfade über einen Prozess (Task) von Degradationsmanager 6 mit der höchsten Priorität bedient, so erreicht man einen zeitlichen Determinismus für die sichere Reaktion des Systems, was bedeutet, dass sich das System im Falle eines auftretenden Fehlers zeitlich im Wesentlichen korrekt bzw. erwartungsgemäß verhält.

Anstelle einer reinen Software-Datenverschlüsselung zwischen den Software-Ebenen der Softwarearchitektur, wie es am Beispiel von AutoSar® bereits beschrieben wurde, erfolgt die Nutzung der Datenverschlüsselung und/oder Datensignatur von vorhandener Hardware 1 eines Kraftfahrzeugs, wie beispielsweise von Sensoren, Aktuatoren, Schnittstellen, Analog-Digital-Wandlern und/oder von Komponenten des Kraftfahrzeugsteuergeräts an sich. Damit erfolgt zusätzlich eine Absicherung der Schnittstelle der Softwarekomponenten zur Hardware 1.

Hardware 1 kommuniziert mit dem Kraftfahrzeugsteuergerät bzw. dem Mikrocontroller. Die kommunizierten, verschlüsselten Daten 8a, 9a ... 8c, 9c umfassen die Informationsdaten 8a...8c sowie die zugeordnete Datenverschlüsselung 9a...9c und/oder Datensignatur von Hardware 1. Über Kommunikationskanal 7 werden die verschlüsselten Daten 8a, 9a ... 8c, 9c Integritätsmanager 3 bereitgestellt. Kommunikationskanal 7 wird aufgrund dieser End-To-End Datenverschlüsselung abgesichert. Einfach-, Mehrfach- sowie vorübergehende Fehler können somit erkannt werden. Es besteht dabei keine Beschränkung auf eine E2E Datenverschlüsselung gemäß AutoSar®, weshalb alternativ, z.B. Cray-Codierte oder zusätzliche Prüfmuster und unverschlüsselte Informationen als eingeprägte Datensignaturen in die Datenformate Verwendung finden können. Moderne Analog-Digital-Wandler werden zum Beispiel durch eigene Sicherheitsmechanismen überwacht, wobei die solchermaßen erzeugten Daten auch in die ECC und EDC eingebunden werden. Diese Sicherheitsmechanismen können daher auch für die Verschlüsselung genutzt werden. Die Kommunikation von Peripherie mit dem Mikrocontroller findet in an sich bekannter Weise beispielsweise über Peripheriebusse, wie SPI, oder analoge bzw. digitale Kommunikation statt.

Integritätsmanager 3 liest die eingehenden Daten 8a, 9a, ... 8c, 9c und analysiert deren Integrität, wobei diese anhand der Plausibilität, Korrektheit, Unversehrtheit und/oder Aktualität der Daten 8a, 9a, ... 8c, 9c bestimmt wird und auch unterschiedliche Integritätsgrade unterschieden werden können. Liegt Datenintegrität im Wesentlichen vor, erhält die Applikationssoftware 4, 5, 6 zumindest den Zugriff auf die Informationsdaten 8a...8c zur weiteren Verarbeitung. Alternativ gibt Integritätsmanager 3 die verschlüsselten Daten 8a, 9a, ... 8c, 9c vollständig frei, wobei diese von der jeweiligen, empfangenden Softwarekomponente entschlüsselt werden.

Die Einschränkung einer Fehlerpropagation zur Erlangung von Sicherheit gegenüber Mehrfachfehlern wird dadurch erreicht, dass Funktionsüberwachung 5 und/oder Degradationsmanager 6 zur Plausibilisierung der Integrität von Daten 8a, 9a, ... 8c, 9c mit niedrigerer Sicherheitsanforderungsstufe, wie z.B. ASIL B, für Abschaltfunktionen höherer Sicherheitsanforderungsstufen, wie z.B. ASIL D, genutzt werden. Hierdurch wird neben der Integritätsprüfung durch Integritätsmanager 3 einer zweiter unabhängiger Sicherheitsmechanismen realisiert. In Fig. 1 ist dies über Bedingungsblöcke 11a und 11b veranschaulicht, wobei als Grundlage verschiedene Datenblöcke eines Kommunikationskanals 7 und/oder Daten 8a, 9a, ... 8c, 9c verschiedener Kommunikationskanäle sowie beliebige Kombinationen der Informationsdaten 8a...8c und/oder Datenverschlüsselungen 9a...c verschiedener Daten 8a, 9a, ... 8c, 9c herangezogen werden können.

Liegt ein Fehler im Kraftfahrzeugregelungssystem vor, wird durch Integritätsmanager 3 ein auf Basis einer Fehlerdiagnose entsprechend generierter Fehlercode an die Applikationssoftware 4, 5, 6, insbesondere jedoch der Funktionsüberwachung 5 und/oder Degradationsmanager 6, übergegeben. Erfolgt die Erkennung eines Fehlers anhand der Plausibilitätsprüfung durch Funktionsüberwachung 5, wird die entsprechende Information durch die Funktionsüberwachung 5, beispielsweise über einen Fehlercode, an Degradationsmanager 6 weitergegeben. Aufgrund der von Integritätsmanager 3 bereitgestellten Informationen bezüglich der Datenintegrität und eventueller Fehler, der Plausibilitätsprüfung sowie der Einbindung der Ablaufüberwachung 10 kann eine detaillierte Fehleranalyse vorgenommen werden. Hierdurch werden präzise Maßnahmen wesentlich komplexerer Degradationskonzepte ermöglicht, wobei Fehler toleriert bzw. Degradationen der Leistungsfähigkeit des Systems vorgenommen werden können. Die Sicherheitszeit des Mikrocontrollers ist für eine Reaktion des Degradationsmanagers 6 ebenfalls von Bedeutung. Der Detailgrad einer Fehleranalyse kann dabei von der Eingruppierung in die jeweilige Sicherheitsanforderungsstufe abhängig gemacht werden. Für einen Steuerbefehl beispielsweise an einen Aktuator müssen interne Diagnoseinformationen innerhalb der Applikationssoftware 3, 4, 5 bereitgestellt werden, sodass sicherheitsrelevante Aktionen eingeleitet werden können. Ein Ausgang des Mikrocontrollers wird beispielsgemäß lediglich dann für eine sicherheitsrelevante Funktion freigeschaltet, wenn anhand der Diagnoseinformation auf eine zeitgerechte und korrekte Datenübertragung zu dem Ausgang geschlossen wird.

Neben dem aufgetretenen Fehler an sich kann für ein entsprechendes Degradationskonzept unter anderem entscheidend sein, ob es sich um einen vorrübergehenden oder permanenten Fehler handelt und/oder in welche Sicherheitsanforderungsstufe eine betroffene Softwarekomponente eingestuft ist. Insofern erfassbar kann weiterhin berücksichtigt werden, ob der vorliegende Fehler durch bewusste äußere Beeinflussung, beispielsweise über ein Sicherheitsleck des Kraftfahrzeugregelungssystems, oder durch andere Weise entstanden sein könnte.

Beispielsweise kann Integritätsmanager 3 im Falle vorübergehender Fehler zumindest die Informationsdaten 8a...8c in nicht plausible Werte ändern, den Zugriff durch die Applikationssoftware 4, 5, 6 sperren oder diesen weiterhin bereitstellen. Ist beispielsweise ein Fehler der Datenverschlüsselung 9a...9c aufgetreten und durch Integritätsmanager 3 festgestellt worden, können die Informationsdaten 8a...8c durch die Applikationssoftware prinzipiell oder temporär weiter genutzt werden, weshalb Integrationsmanager 3 die Informationsdaten 8a...8c der Applikationssoftware 3, 4, 5 bereitstellt und ein Fehlercode an Degradationsmanager 6 übergibt. Liegt ein solcher Fehler nach einer definierten Zeit weiterhin vor kann eine entsprechende Reaktion durch Degradationsmanager 6 ausgelöst werden.

Bei den nachfolgenden Beschreibungen zu den weiteren Figuren wird, um Wiederholungen zu vermeiden, im Wesentlichen nur noch auf die Unterschiede zu der oben beschriebenen Ausführungsform eingegangen, wobei zur Vereinfachung gleiche Elemente mit den gleichen Bezugszeichen versehen und jeweils nur für die Erfindung wesentliche Details erläutert werden.

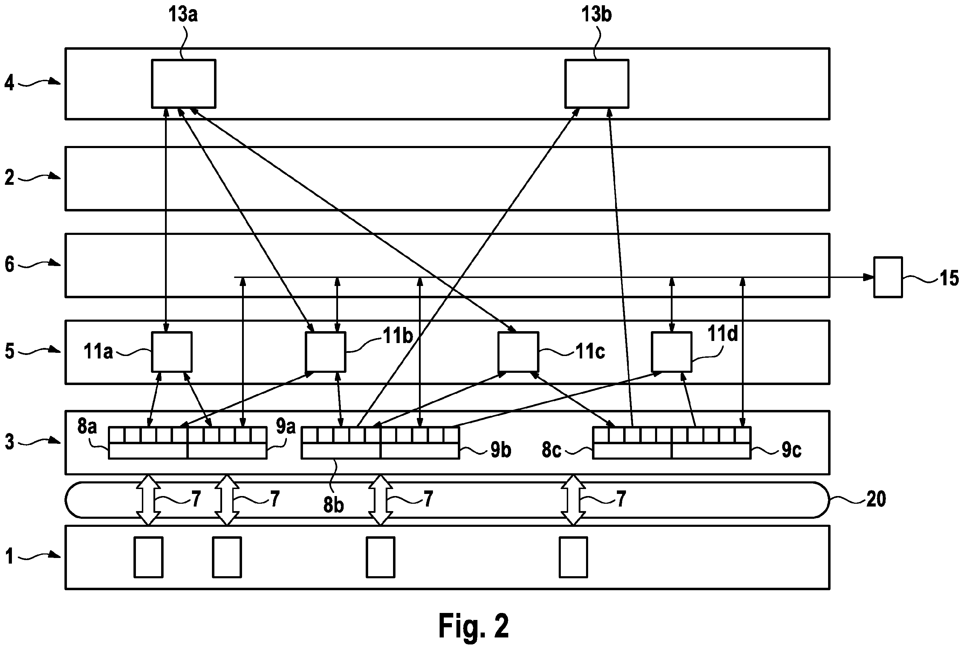

Das Ausführungsbeispiel der Fig. 1 hat sich, ohne Einschränkung darauf, im Wesentlichen an der Verwendung oder am Aufbau der einheitlichen Softwarearchitektur AutoSar® orientiert. Die Fig. 2 zeigt nun eine im Vergleich zum Ausführungsbeispiel der Fig. 1 alternative Anordnung der Software-Ebenen. Integritätsmanager 3, Funktionsüberwachungsebene 5 sowie Degradationsmanager 6 sind dementsprechend hierarchisch unterhalb von Laufzeitumgebung 2 realisiert. Diese kann dabei zusätzlich Funktionen der Ablauf- bzw. Prozessüberwachung 10 umfassen. Die jeweiligen Prozesse der Regelfunktionen 13a, 13b oder weiterer System- bzw. Hilfsfunktionen der Software-Ebenen sind gemäß ihrer Sicherheitsanforderung, z.B. ASIL B und ASIL D, konzipiert.

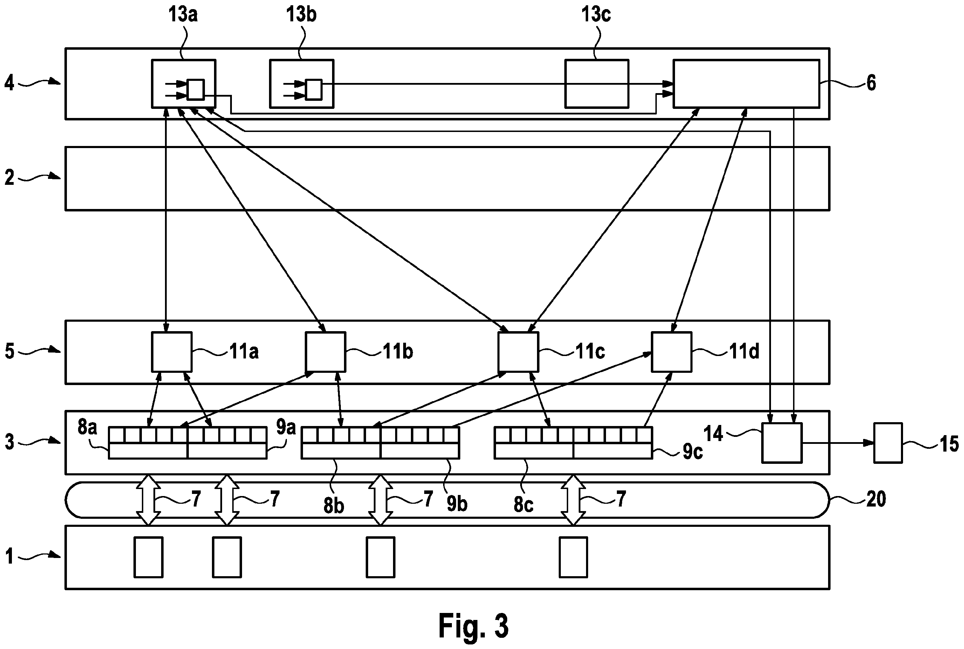

Degradationsmanager 6 kann gemäß dem in Fig. 3 dargestellten Ausführungsbeispiel auch als eigenständiger Software-Prozess bzw. eigenständige Software-Funktion durch Regelfunktionsebene 4 ausgeführt werden. Die Degradationsmaßnahmen werden beispielsgemäß nach Plausibilisierung durch Integritätsmanager 6 über Bedingungsblock 14 abgearbeitet. Weiterhin erfolgt eine Überwachung einer Kraftfahrzeugregelungsfunktion oder eines Software-Prozesses 13c durch einen Überwachungsprozess 13b mit einer niedrigeren Sicherheitsanforderungsstufe, z.B. ASIL B. Zusätzlich ist ein Prozess 13a mit einer hohen Sicherheitsanforderungsstufe, z.B. ASIL D, zur Überwachung der Regelfunktion 13c und des Überwachungsprozesses 13b der Regelfunktion vorgesehen.

## Patentansprüche

1. Elektronisches Regelungssystem, insbesondere ein Kraftfahrzeugregelungssystem, umfassend Hardwarekomponenten (1) und Softwarekomponenten (2, 3, 4, 5, 6, 10, 20), wobei die Hardwarekomponenten (1) durch zumindest eine Basissoftwarekomponente (20) und/oder zumindest eine Laufzeitumgebung (2) abstrahiert werden und in welchem ein implementiertes Sicherheitskonzept zwei oder mehrere Software-Ebenen beschreibt, wobei eine erste Software-Ebene (4) Regelfunktionen einer Applikationssoftware umfasst und eine zweite Software-Ebene (5) als Funktionsüberwachung insbesondere zur Absicherung von Fehlern der Regelfunktionen ausgestaltet ist, **dadurch gekennzeichnet, dass** eine von zumindest einer Hardwarekomponente (1) bereitgestellte Datenverschlüsselung (9a, 9b, 9c) und/oder Datensignatur zur Datenabsicherung mindestens eines Kommunikationskanals (7) der Hardwarekomponente (1) mit mindestens einer ersten Softwarekomponente (3) genutzt wird.

2. Elektronisches Regelungssystem nach Anspruch 1, **dadurch gekennzeichnet, dass** die erste Softwarekomponente (3) ein Integritätsmanager (3) ist, wobei die über den Kommunikationskanal (7) kommunizierten, verschlüsselten und/oder signierten Daten (8a, 9a ... 8c, 9c) dem Integritätsmanager (3) und/oder der Laufzeitumgebung (2) und/oder der Basissoftwarekomponente (20) bereitgestellt werden und der Integritätsmanager (3) die kommunizierten Daten (8a, 9a ... 8c, 9c) des Kommunikationskanals (7) hinsichtlich ihrer Integrität prüft, wobei der Integritätsmanager (3) insbesondere die Datenverschlüsselung (9a, 9b, 9c) und/oder Datensignatur zur Überprüfung der Integrität der Daten (8a, 9a, ... 8c, 9c) heranzieht.

3. Elektronisches Regelungssystem nach Anspruch 2, **dadurch gekennzeichnet, dass** der Integritätsmanager (3) bei im Wesentlichen vorhandener Integrität der verschlüsselten und/oder signierten Daten (8a, 9a, ... 8c, 9c) die unverschlüsselten und/oder nicht signierten Informationsdaten (8a...c) der Applikationssoftware (4, 5, 6) bereitstellt.

4. Elektronisches Regelungssystem nach Anspruch 2 oder 3, **dadurch gekennzeichnet, dass** der Integritätsmanager (3) bei nicht vorhandener Integrität der verschlüsselten und/oder signierten Daten (8a, 9a, ... 8c, 9c) einen Fehlercode, welcher insbesondere durch die Applikationssoftware verarbeitet werden kann, generiert, wobei die unverschlüsselten und/oder nicht signierten Informationsdaten (8a...8c) der Applikationssoftware (4, 5, 6) nicht oder lediglich gemeinsam mit dem Fehlercode bereitstellt werden und/oder den unverschlüsselten Informationsdaten (8a...8c) wird ein nicht plausibler Wert zugewiesen.

5. Elektronisches Regelungssystem nach mindestens einem der Ansprüche 2 bis 4, **dadurch gekennzeichnet, dass** der Integritätsmanager (3) der Applikationssoftware (4, 5, 6) untergeordnet und/oder der Laufzeitumgebung (2) übergeordnet und/oder in der Laufzeitumgebung (2) implementiert ist, wobei die Laufzeitumgebung (2) dem Integritätsmanager (3) die verschlüsselten und/oder signierten Daten (8a, 9a...8c, 9c) bereitstellt.

6. Elektronisches Regelungssystem nach mindestens einem der Ansprüche 1 bis 5, **dadurch gekennzeichnet, dass** ein Degradationsmanager (6) vorgesehen ist, welcher als zumindest eine dritte Software-Ebene und/oder als zumindest ein Software-Prozess der ersten (4) und/oder der zweiten (5) Software-Ebene ausgeführt wird, wobei der Degradationsmanager (6) mindestens eine Degradationsstufe der Regelfunktionen der ersten Software-Ebene (4) und/oder Funktionsüberwachung der zweiten Software-Ebene (5) umfasst.

7. Elektronisches Regelungssystem nach Anspruch 6, **dadurch gekennzeichnet, dass** die Funktionsüberwachung (5) und/oder der Degradationsmanager (6) die Datenverschlüsselung (9a, 9b, 9c) und/oder Datensignatur für eine zusätzliche Plausibilisierung der Daten (8a, 9a...8c, 9c) verwendet.

8. Elektronisches Regelungssystem nach Anspruch 6 oder 7, **dadurch gekennzeichnet, dass** eine Abschaltfunktion des Degradationsmanagers (6) durch zumindest einen Software-Prozess mit einer hohen, insbesondere einer höchsten Priorität ausgeführt wird.

9. Elektronisches Regelungssystem nach mindestens einem der Ansprüche 6 bis 8, **dadurch gekennzeichnet, dass** in Abhängigkeit von der Integrität der Daten (8a, 9a...8c, 9c) und/oder in Abhängigkeit vom generierten Fehlercode und/oder in Abhängigkeit von der zusätzlichen Plausibilisierung der Daten, eine oder mehrere selektive Abschaltungen und/oder Degradationen der Leistungsfähigkeit des Kraftfahrzeugregelungssystems und/oder der Regelfunktionen (4) und/oder der Funktionsüberwachung (5) durch den Degradationsmanager (6) ausgeführt werden.

10. Elektronisches Regelungssystem nach mindestens einem der Ansprüche 6 bis 9, **dadurch gekennzeichnet, dass** die Funktionsüberwachung (5) und/oder der Degradationsmanager (6) und/oder der Integritätsmanager (3) auf die Datenverschlüsselung (9a, 9b, 9c) und/oder Datensignatur der Daten (8a, 9a...8c, 9c) zugreifen können.

11. Elektronisches Regelungssystem nach mindestens einem der Ansprüche 1 bis 10, **dadurch gekennzeichnet, dass** ein Neustart und/oder eine Synchronisation zum Programmablauf eines das Verfahren ausführenden Mikrocontrollers im laufenden Betrieb, insbesondere innerhalb einer Sicherheitszeit vorgesehen ist, wobei im Falle der Überschreitung der Sicherheitszeit ein sicherer Zustand durch ein Abschaltmittel, insbesondere durch einen Watchdog, eingeleitet wird.

12. Elektronisches Regelungssystem nach mindestens einem der Ansprüche 2 bis 11, **dadurch gekennzeichnet, dass** der Integritätsmanager (3) für Softwarekomponenten datentechnische und/oder zeitliche Separierung sicherstellt.

13. Elektronisches Regelungssystem nach Anspruch 12, **dadurch gekennzeichnet, dass** die datentechnische und/oder zeitliche Separierung dazu genutzt wird um Softwarekomponenten unterschiedlicher Sicherheitsanforderungsstufen insbesondere bei Verletzung der Unabhängigkeit selektiv und/oder priorisiert abzuschalten.

## Claims

1. Electronic closed-loop control system, particularly a motor vehicle control system, comprising hardware components (1) and software components (2, 3, 4, 5, 6, 10, 20), wherein the hardware components (1) are abstracted by at least one basic software component (20) and/or at least one runtime environment (2) and in which an implemented safety concept describes two or more software levels, wherein a first software level (4) comprises control functions of a piece of application software and a second software level (5) is in the form of a function monitor particularly for the purpose of protecting against errors in the control functions, **characterized in that** data encryption (9a, 9b, 9c) and/or data signature, provided by at least one hardware component (1), is used for data protection for at least one communication channel (7) of the hardware component (1) with at least one software component (3).

2. Electronic closed-loop control system according to Claim 1, **characterized in that** the first software component (3) is an integrity manager (3), wherein the encrypted and/or signed data (8a, 9a ... 8c, 9c) communicated via the communication channel (7) are provided for the integrity manager (3) and/or the runtime environment (2) and/or the basic software component (20), and the integrity manager (3) checks the integrity of the communicated data (8a, 9a ... 8c, 9c) from the communication channel (7), wherein the integrity manager (3) uses particularly the data encryption (9a, 9b, 9c) and/or data signature for checking the integrity of the data (8a, 9a, ... 8c, 9c).

3. Electronic closed-loop control system according to Claim 2, **characterized in that** the integrity manager (3) provides the unencrypted and/or unsigned information data (8a...c) for the application software (4, 5, 6) if the integrity of the encrypted and/or signed data (8a, 9a, ... 8c, 9c) is essentially existent.

4. Electronic closed-loop control system according to Claim 2 or 3, **characterized in that** the integrity manager (3) generates an error code, which can be processed particularly by the application software, if the integrity of the encrypted and/or signed data (8a, 9a, ... 8c, 9c) is not existent, wherein the unencrypted and/or unsigned information data (8a...8c) are not provided for the application software (4, 5, 6), or are provided just together with the error code, and/or the unencrypted information data (8a...8c) are assigned an implausible value.

5. Electronic closed-loop control system according to at least one of Claims 2 to 4, **characterized in that** the integrity manager (3) is subordinate to the application software (4, 5, 6) and/or superordinate to the runtime environment (2) and/or implemented in the runtime environment (2), wherein the runtime environment (2) provides the encrypted and/or signed data (8a, 9a ... 8c, 9c) for the integrity manager (3).

6. Electronic closed-loop control system according to at least one of Claims 1 to 5, **characterized in that** a degradation manager (6) is provided that is in the form of at least one third software level and/or in the form of at least one software process of the first (4) and/or the second (5) software level, wherein the degradation manager (6) comprises at least one degradation level for the control functions of the first software level (4) and/or a function monitor for the second software level (5).

7. Electronic closed-loop control system according to Claim 6, **characterized in that** the function monitor (5) and/or the degradation manager (6) uses the data encryption (9a, 9b, 9c) and/or data signature for additional plausibilization of the data (8a, 9a ... 8c, 9c) .

8. Electronic closed-loop control system according to Claim 6 or 7, **characterized in that** a disconnection function of the degradation manager (6) is executed by at least one software process with high, particularly maximum, priority.

9. Electronic closed-loop control system according to at least one of Claims 6 to 8, **characterized in that** the integrity of the data (8a, 9a ... 8c, 9c) and/or the generated error code and/or the additional plausibilization of the data is/are taken as a basis for the degradation manager (6) to execute one or more selective disconnections and/or degradations for the performance of the motor vehicle control system and/or the control functions (4) and/or the function monitor (5) .

10. Electronic closed-loop control system according to at least one of Claims 6 to 9, **characterized in that** the function monitor (5) and/or the degradation manager (6) and/or the integrity manager (3) can access the data encryption (9a, 9b, 9c) and/or data signature of the data (8a, 9a ... 8c, 9c).

11. Electronic closed-loop control system according to at least one of Claims 1 to 10, **characterized in that** a restart and/or synchronization for the program flow of a microcontroller executing the method is provided in the course of operation, particularly within a safety time, wherein a safe state is initiated by a disconnection means, particularly by a watchdog, if the safety time is exceeded.

12. Electronic closed-loop control system according to at least one of Claims 2 to 11, **characterized in that** the integrity manager (3) ensures data-oriented and/or temporal separation for software components.

13. Electronic closed-loop control system according to Claim 12, **characterized in that** the data-oriented and/or temporal separation is used to disconnect software components with different safety requirement levels selectively and/or in prioritized fashion particularly if independence is infringed.

## Revendications

1. Système de régulation électronique, notamment un système de régulation de véhicule automobile, comprenant des composants matériels (1) et des composants logiciels (2, 3, 4, 5, 6, 10, 20), les composants matériels (1) étant abstraits par au moins un composant logiciel de base (20) et/ou au moins un environnement d'exécution (2) et dans lequel un concept de sécurité mis en oeuvre décrit deux niveaux logiciels ou plus, un premier niveau logiciel (4) comportant des fonctions de régulation d'un logiciel d'application et un deuxième niveau logiciel (5) étant configuré en tant que surveillance du fonctionnement, notamment pour la protection contre les erreurs des fonctions de régulation, **caractérisé en ce qu'**un élément parmi un cryptage de données (9a, 9b, 9c) et/ou une signature de données, fournis par au moins un composant matériel (1), est utilisé pour la protection des données d'au moins un canal de communication (7) du composant matériel (1) avec au moins un premier composant logiciel (3).

2. Système de régulation électronique selon la revendication 1, **caractérisé en ce que** le premier composant logiciel (3) est un gestionnaire d'intégrité (3), les données (8a, 9a ... 8c, 9c) communiquées par le biais du canal de communication (7), cryptées et/ou signées étant fournies au gestionnaire d'intégrité (3) et/ou de l'environnement d'exécution (2) et/ou du composant logiciel de base (20) et le gestionnaire d'intégrité (3) contrôlant l'intégrité des données (8a, 9a ... 8c, 9c) communiquées du canal de communication (7), le gestionnaire d'intégrité (3) employant notamment le cryptage de données (9a, 9b, 9c) et/ou la signature des données pour contrôler l'intégrité des données (8a, 9a, 8c, 9c).

3. Système de régulation électronique selon la revendication 2, **caractérisé en ce que** le gestionnaire d'intégrité (3), dans le cas d'une intégrité sensiblement présente des données (8a, 9a, ... 8c, 9c) cryptées et/ou signées, fournit les données d'information (8a...c) décryptées et/ou non signées aux logiciels d'application (4, 5, 6).

4. Système de régulation électronique selon la revendication 2 ou 3, **caractérisé en ce que** le gestionnaire d'intégrité (3), en l'absence d'intégrité des données (8a, 9a, ... 8c, 9c) cryptées et/ou signées, génère un code d'erreur qui peut notamment être traité par les logiciels d'application, les données d'information (8a...c) décryptées et/ou non signées n'étant pas fournies aux logiciels d'application (4, 5, 6) ou seulement fournies conjointement avec le code d'erreur et/ou une valeur non plausible étant attribuée aux données d'information (8a...8c) décryptées.

5. Système de régulation électronique selon au moins l'une des revendications 2 à 4, **caractérisé en ce que** le gestionnaire d'intégrité (3) est subordonné aux logiciels d'application (4, 5, 6) et/ou superviseur de l'environnement d'exécution (2) et/ou mis en oeuvre dans l'environnement d'exécution (2), l'environnement d'exécution (2) fournissant les données (8a, 9a, ... 8c, 9c) cryptées et/ou signées au gestionnaire d'intégrité (3) .

6. Système de régulation électronique selon au moins l'une des revendications 1 à 5, **caractérisé par** la présence d'un gestionnaire de dégradation (6), lequel est exécuté sous la forme d'au moins un troisième niveau logiciel et/ou sous la forme d'au moins un processus logiciel du premier (4) et/ou du deuxième (5) niveau logiciel, le gestionnaire de dégradation (6) comportant au moins un étage de dégradation des fonctions de régulation du premier niveau logiciel (4) et/ou la surveillance du fonctionnement du deuxième niveau logiciel (5).

7. Système de régulation électronique selon la revendication 6, **caractérisé en ce que** la surveillance du fonctionnement (5) et/ou le gestionnaire de dégradation (6) utilisent le cryptage de données (9a, 9b, 9c) et/ou la signature des données pour conférer aux données (8a, 9a ... 8c, 9c) une plausibilité supplémentaire.

8. Système de régulation électronique selon la revendication 6 ou 7, **caractérisé en ce qu'**une fonction de mise hors circuit du gestionnaire de dégradation (6) est accomplie par au moins un processus logiciel ayant une priorité élevée, notamment la plus élevée.

9. Système de régulation électronique selon au moins l'une des revendications 6 à 8, **caractérisé en ce qu'**une ou plusieurs mises hors circuit sélectives et/ou dégradations de la capacité du système de régulation de véhicule automobile et/ou des fonctions de régulation (4) et/ou de la surveillance du fonctionnement (5) sont effectuées par le gestionnaire de dégradation (6) en fonction de l'intégrité des données (8a, 9a...8c, 9c) et/ou en fonction du code d'erreur généré et/ou en fonction de la plausibilité supplémentaire attribuée aux données.

10. Système de régulation électronique selon au moins l'une des revendications 6 à 9, **caractérisé en ce que** la surveillance du fonctionnement (5) et/ou le gestionnaire de dégradation (6) et/ou le gestionnaire d'intégrité (3) peuvent accéder au cryptage de données (9a, 9b, 9c) et/ou à la signature des données des données (8a, 9a ... 8c, 9c).

11. Système de régulation électronique selon au moins l'une des revendications 1 à 10, **caractérisé en ce qu'**un redémarrage et/ou une synchronisation par rapport au déroulement du programme d'un microcontrôleur qui met en oeuvre le procédé sont prévus au cours du fonctionnement, notamment au sein d'une durée de sécurité, un état de sécurité étant notamment initié par un moyen de mise hors circuit, notamment par un chien de garde, en cas de dépassement de la durée de sécurité.

12. Système de régulation électronique selon au moins l'une des revendications 2 à 11, **caractérisé en ce que** le gestionnaire d'intégrité (3) garantit la séparation informatique et/ou temporelle pour les composants logiciels.

13. Système de régulation électronique selon la revendication 12, **caractérisé en ce que** la séparation informatique et/ou temporelle est utilisée pour mettre hors circuit de manière sélective et/ou prioritaire les composants logiciels des différents étages de contrainte de sécurité, notamment en cas de violation de l'indépendance.
